# EUROPÄISCHE PATENTSCHRIFT

(11) **EP 3 269 571 B1**
(45) Veröffentlichungstag und Bekanntmachung des Hinweises auf die Patenterteilung: **09.10.2019**
(21) Anmeldenummer: 17180305.9
(22) Anmeldetag: 07.07.2017
(51) Int. Cl.: B60H 1/00, B60N 2/56, B61D 27/00, B61D 33/00

(54) **VERFAHREN ZUM BETRIEB EINES SYSTEMS ZUM KLIMATISIEREN EINES INNENRAUMS EINES FAHRZEUGS**
METHOD FOR OPERATING A SYSTEM FOR AIR-CONDITIONING A VEHICLE INTERIOR
PROCÉDÉ DE FONCTIONNEMENT D'UN SYSTÈME DE CLIMATISATION D'UN HABITACLE D'UN VÉHICULE AUTOMOBILE

(30) Priorität: 11.07.2016 DE 102016112667
(43) Veröffentlichungstag der Anmeldung: 17.01.2018
(73) Patentinhaber: Bombardier Transportation GmbH, 10785 Berlin (DE)
(72) Erfinder: Siegemund, Thomas, 14167 Berlin (DE)
(74) Vertreter: Zimmermann & Partner Patentanwälte mbB

(56) Entgegenhaltungen:
- US-A1- 2006 042 788
- US-A1- 2009 000 778

## Beschreibung

### Technisches Gebiet

Die vorliegende Erfindung betrifft ein Verfahren zum Betrieb eines Systems zum Klimatisieren eines Innenraums eines Fahrzeugs. Ein solches Fahrzeug, zum Beispiel ausgebildet als Schienenfahrzeug, kann zum Personentransport dienen. Weiterhin betrifft die Erfindung eine Vorrichtung zum Klimatisieren eines solchen Fahrzeugs, wobei der Komfort von Fahrgästen erhöht wird.

### Vorbekannter Stand der Technik

Klimavorrichtungen für Fahrzeuge sind bereits aus der Kraftfahrzeug-, Schienenfahrzeugtechnik und aus Luftfahrt bekannt. Dabei gilt es, Temperaturen in Innenräumen dieser Fahr- und Flugzeuge beeinflussen zu können.

Die WO 2010/145954 A1 beschreibt eine Klimatisierungseinrichtung, welche eine Regelung auf Basis verschiedener Temperatursensoren vorsieht.

Die deutsche Offenlegungsschrift DE 10 2005 019 616 A1 offenbart eine Klimaanlage eines Kraftfahrzeugs. Diese umfasst einen Fahrzeugsitz mit einem Sitzteil und einer Lehne, von denen wenigstens eines ein Klimasystem aufweist. Dabei ist in der Innenseite des Bezugs eine Ventilationsschicht vorgesehen.

Weiterhin ist aus der DE 200 02 540 U1 ein Sitzpolsterteil für einen Fahrzeugsitz bekannt, welches mit einem Formteil aus einem luftdurchlässigen Material und einer auf einer Rückseite des Formteils angeordneten Belüftungseinrichtung vorgesehen ist.

### Nachteile des Standes der Technik

Die bisher bekannten Lösungen gestatten es mittels unterschiedlicher Methoden, das Komforterlebnis eines Fahrgastes in einem Fahrzeug zu beeinflussen.

### Problemstellung

Eine Aufgabe der vorliegenden Erfindung ist es daher, ein Verfahren zum Steuern eines Systems bereitzustellen, welches einen reduzierten Energieeinsatz ermöglicht, ohne dabei Abstriche in der Gesamtwirkung des Systems in Kauf nehmen zu müssen.

### Erfindungsgemäße Lösung

Die obige Aufgabe wird durch ein Verfahren zum Betrieb eines Systems zum Klimatisieren eines Innenraums nach Anspruch 1, ein System zum Klimatisieren nach Anspruch 11, oder durch ein Fahrzeug nach Anspruch 15 gelöst.

Das System zum Klimatisieren eines Innenraums, welches durch das erfindungsgemäße Verfahren vorteilhaft betrieben wird, weist eine Raumklimatisierungsvorrichtung zum Konditionieren von im Innenraum befindlicher oder von darin eingeleiteter Luft und eine Sitzvorrichtung mit einer Sitzklimatisierungsvorrichtung zum Temperieren einer einem fahrgastzugewandten Seite der Sitzvorrichtung auf. Weiterhin umfasst das System eine Regeleinheit zum Ansteuern der Raumklimatisierungsvorrichtung und der Sitzklimatisierungsvorrichtung.

Als Raumklimatisierungsvorrichtung kann zum Beispiel eine klassische Heiz- und/oder Klimaanlage eines Zimmers, eines Gebäudes, eines Schienen- oder Kraftfahrzeugs zum Einsatz kommen. Durch die Raumklimatisierungsvorrichtung kann die Luft in dem entsprechenden Innenraum oder auch Luft, welche in den Innenraum eingeleitet wird, erwärmt, abgekühlt und/oder be- oder entfeuchtet werden.

Beim Ausführen des Verfahrens zum Betrieb des Systems wird zum einen eine Soll-Temperatur für den Innenraum vorgegeben und eine Ist-Temperatur in dem Innenraum gemessen.

Weiterhin wird mithilfe der Regeleinheit die Raumklimatisierungsvorrichtung derart angesteuert, sodass die Ist-Temperatur der Luft im Innenraum sich der Soll-Temperatur annähert. Bei diesem Regelungsvorgang kann ein Offset-Wert verwendet werden, um eine Regelungstoleranz und/oder eine Regelhysterese des Regelkreises zu erhöhen und oder um eine Leistungsaufnahme oder eine Klimaleistung der Raumklimatisierungsvorrichtung zu verringern. Insbesondere kann der Offset-Wert vor oder während des Regelungsvorgangs festgelegt bzw. angepasst werden. Diesem im Folgenden als Offset-Regelungsbetrieb bezeichneter Regelungsbetrieb ist zu eigen, durch die Verwendung eines Offset-Werts während eines Berechnungs- oder Bestimmungsvorgangs eines Regelungsend- oder Regelungszwischenwerts Details der Regelung, wie zum Beispiel Regelungsgeschwindigkeit, und/oder Toleranz im Erreichen einer End- bzw. Soll-Temperatur dahingehend zu beeinflussen, dass die Energieaufnahme der Raumklimatisierungsvorrichtung im Vergleich zu einem Norm-Regelungsbetrieb sinkt. Unter Norm-Regelungsbetrieb wird hierbei ein Regelungsbetrieb verstanden, wobei ein Sollwert der Temperatur ohne Verwendung eines Offset-Wert als, insbesondere alleinige, Führungsgröße dient.

In Erweiterung dieses Grundprinzips wird erfindungsgemäß vorgeschlagen, eine Bedingung für den Betrieb des Systems im Offset-Regelungsbetrieb, bzw. für ein Umschalten zwischen Norm-Regelungsbetrieb und Offset-Regelungsbetrieb vorzusehen, insbesondere entweder als optionale *Kann*-Bedingung oder als zwingende Muss-Bedingung.

Gemäß einer ersten Ausgestaltung kann der Offset-Wert in den Regelungsvorgang einbezogen bzw. kann das System im Offset-Regelungsbetrieb gefahren werden, wenn die Sitzklimatisierungsvorrichtung der Sitzvorrichtung in Betrieb ist.

Gemäß einer weiteren Ausgestaltung läuft das System nur dann, bzw. ausschließlich im Offset-Regelungsbetrieb, wenn die Sitzklimatisierungsvorrichtung in Betrieb ist.

Im Rahmen einer zusätzlichen Ausgestaltung wird das Verfahren auf den Offset-Regelungsbetrieb umgeschaltet, wenn die Sitzklimatisierungsvorrichtung in Betrieb ist. Optional dazu kann das Verfahren so gestaltet sein, dass in den Norm-Regelungsbetrieb umgeschaltet werden muss, wenn die Sitzklimatisierungsvorrichtung nicht in Betrieb ist.

Weiterhin wird vorgeschlagen gemäß einer Ausführungsform in dem Verfahren einen Prüfungsschritt dahingehend vorzusehen, ob die Sitzklimatisierungsvorrichtung aktiv ist. Ergibt die Prüfung, dass die Sitzklimatisierungsvorrichtung in Betrieb ist, wird das System optional, zwingend oder ausschließlich im Offset-Regelungsbetrieb gefahren. Ist das Ergebnis des Prüfvorgangs, dass die Sitzklimatisierungsvorrichtung inaktiv ist, so erfolgt die Regelung ohne Verwendung des Offset-Werts, also im Norm-Regelungsbetrieb.

Gemäß einer weiteren Ausgestaltung erfolgt die Prüfung des Betriebszustands der Sitzklimatisierungsvorrichtung automatisch durch die Regeleinheit, und insbesondere initiiert diese ein Umschalten zwischen Norm-Regelungsbetrieb und Offset-Regelungsbetrieb.

Das Verfahren mit Offset-Regelungsbetrieb bei aktivierter Sitzklimatisierungsvorrichtung hat den entscheidenden Vorteil, dass der erforderliche Energiebedarf des Systems geringer ausfällt und somit Betriebskosten eingespart werden. Gleichzeitig stellt ein Fahrgast im Wesentlichen keine Veränderung der Umgebungsbedingungen fest, insbesondere wird ein Wohlbefinden eines Fahrgastes sichergestellt. Diesem ist beispielsweise nicht zu warm oder zu kalt, obgleich durch den Offset-Regelungsbetrieb das System oder insbesondere die Raumklimatisierungsvorrichtung mit geringerer Leistung betrieben wird.

Der Offset-Wert kann gemäß einem Ausführungsbeispiel als Temperaturdifferenz definiert sein (Variante 1), welche auf den Wert der Soll-Temperatur aufgeschlagen oder davon abgezogen wird. Damit wird die Soll-Temperatur mittels des Offset-Werts zu einer modifizierten Soll-Temperatur, insbesondere regelungs-intern, abgeändert, welche als Führungsgröße des Regelkreises herangezogen wird. Auf diese Weise wird mithilfe eines Offset-Werts die Regelungstoleranz verändert. Der Offset-Wert ist dabei so gewählt, dass die modifizierte Soll-Temperatur in einem Bereich zwischen der originalen Soll-Temperatur und Ist-Temperatur liegt. Dies hat zur Folge, dass die Regelabweichung der Regelung geringer wird, und somit das Regelungsziel schneller und bei einem geringeren Energieaufwand erreicht wird.

Dieser niedrigere Energieeinsatz hat deshalb keine Auswirkung auf das Komforterlebnis des Fahrgastes, da die Sitzklimatisierungsvorrichtung in Betrieb ist. Denn diese schafft in der unmittelbaren, subjektiven Umgebung des Fahrgastes einem Mikroklima ähnliche Verhältnisse, indem sich dort die klimatechnischen Wirkungen der Raumklimatisierungsvorrichtung und der Sitzklimatisierungsvorrichtung überschneiden und teilweise addieren. Auf diese Weise werden für den Fahrgast angenehme Umgebungsbedingungen geschaffen, insbesondere hinsichtlich der Temperatur. Die Sitzklimatisierungsvorrichtung ist dazu entsprechend geeignet eingerichtet.

Mithilfe des folgenden Ausführungsbeispiels, aber nicht beschränkt darauf, soll die Wirkung und Zielerreichung des Verfahrens verdeutlicht werden: Beispielsweise kann die Sitzklimatisierungsvorrichtung als Be- und/oder Entlüftungsvorrichtung in der Sitzvorrichtung gestaltet sein. Dabei ist eine Oberfläche einer Sitzschale oder Rückenlehne perforiert und über ein Kanalsystem mit einem Lüfter verbunden. Wird mithilfe des Lüfters Luft durch das Kanalsystem zu den Perforationen in der Oberfläche hin oder davon weg gefördert und tritt diese dort aus bzw. ein, so wird die Oberfläche des auf der Sitzvorrichtung sitzenden Fahrgastes, insbesondere Rücken und/oder Gesäß des Fahrgastes von einer Luftströmung umflossen. Dies bewirkt einen kühlenden Effekt. Weiterhin kann in diesem Fall der Offset-Wert positiv gewählt oder bestimmt werden, wodurch die als Führungsgröße dienende modifizierte Soll-Temperatur höher ist als die ursprüngliche Soll-Temperatur. Ohne den kühlenden Effekt der Sitzklimatisierungsvorrichtung würde der Fahrgast eine subjektiv zu hohe Temperatur empfinden, nämlich die modifizierte Soll-Temperatur anstatt der niedrigeren originalen Soll-Temperatur: Dem Fahrgast wäre zu warm. Da die Sitzklimatisierungsvorrichtung in Betrieb ist, ermöglicht diese eine zusätzliche, subjektive und lokal begrenzte Kühlung des Fahrgastes, wodurch das Empfinden der subjektiv zu hoch eingestellten, modifizierten Soll-Temperatur kompensiert wird. Mit anderen Worten: Obgleich dem Fahrgast aufgrund der sparsamer im Offset-Regelungsbetrieb gefahrenen Raumklimatisierungsvorrichtung zu warm sein müsste, so ist dies nicht der Fall, da der Körper des Fahrgastes direkt durch die Sitzklimatisierungsvorrichtung zusätzlich, insbesondere subjektiv, gekühlt wird.

Das im voranstehenden Absatz beschriebene Zusammenwirken der Raumklimatisierungsvorrichtung und der Sitzklimatisierungsvorrichtung, insbesondere hinsichtlich ihrer subjektiven kühlenden bzw. wärmenden Wirkung auf einen Fahrgast, ist nicht auf das beschriebenen Ausführungsbeispiel beschränkt, sondern ist analog auf die im folgenden beschriebenen Ausführungsbeispiele zu übertragen.

Im Rahmen eines weiteren Ausführungsbeispiels wird offenbart, dass der Offset-Wert dazu dient, um die Leistungsaufnahme der Raumklimatisierungsvorrichtung zu verringern (Variante 2). Für den Fall, dass der Innenraum zu kühlen sei, bzw. dass die Ist-Temperatur größer als die Soll-Temperatur ist, aber nicht beschränkt darauf, bewirkt eine Reduzierung der Leistungsaufnahme der Raumklimatisierungsvorrichtung, dass diese einen reduzierten und/oder wärmeren Luftvolumenstrom in den Innenraum einbringt. Aufgrund dessen erhöht sich der Zeitbedarf, ehe die Ist-Temperatur die gewünschte Soll-Temperatur erreicht hat. Für den im Innenraum befindlichen Fahrgast würde sich somit der alleinige leistungsreduzierte Betrieb so darstellen, dass es im Innenraum *nur langsam* - gemäß Norm-Regelungsbetrieb - kühl werden würde. Die zusätzlich aktive Sitzklimatisierungsvorrichtung bzw. das dadurch geschaffene Mikroklima im Bereich der Sitzvorrichtung kompensiert die defizitäre Kühlung des Innenraums durch den beschriebenen, zusätzlichen Kühleffekt, wodurch der Fahrgast im Wesentlichen keinen Unterschied hinsichtlich der Temperatur im Innenraum feststellt.

Gemäß einem anderen Ausführungsbeispiel wird der Offset-Wert dazu verwendet, die dem Regelkreis immanente Regelhysterese zu vergrößern (Variante 3). Dadurch reduziert sich zum Beispiel die Anzahl der Schalt- bzw. Regelungsvorgänge der Raumklimatisierungsvorrichtung. Auch dies führt zu einem reduzierten Energiebedarf des Systems, wobei der eigentliche, für den Komfort ungünstige Effekt der Maßnahme durch Einsatz der Sitzklimatisierungsvorrichtung ausgeglichen wird.

Es liegt explizit im Rahmen der Erfindung die unterschiedlichen Ausführungsformen des Offset-Werts miteinander zu kombinieren. Beispielsweise können im Offset-Regelungsbetrieb ein erster Offset-Wert zur Bereitstellung einer modifizierten Soll-Temperatur und gleichzeitig ein zweiter Offset-Wert zur Beeinflussung der Leistungsaufnahme der Raumklimatisierungsvorrichtung zum Einsatz kommen.

Gemäß einer weiteren Ausgestaltung der Erfindung wird der Betrag oder auch Variante des Offset-Werts in Abhängigkeit von einer Temperaturdifferenz zwischen Ist-Temperatur und Soll-Temperatur bestimmt. Weiterhin oder alternativ dazu kann der Betrag des Offset-Werts in Abhängigkeit von der Ist-Temperatur gewählt werden. Dies kann insbesondere dann zielführend sein, wenn die Sitzklimatisierungsvorrichtung ausschließlich als Be- oder Entlüftungsvorrichtung ausgebildet ist, und somit die Temperatur des den Fahrgast beaufschlagenden Luftstroms gleich der Temperatur im Innenraum, also der Ist-Temperatur, ist. Sollte beispielsweise die Ist-Temperatur im Fahrzeuginnenraum sehr hoch, jedoch die Soll-Temperatur verhältnismäßig niedrig sein, dann sollte im Zuge des Offset-Regelungsbetriebs möglichst keine Reduzierung der Leistungsaufnahme der Raumklimatisierungsvorrichtung gemäß Variante 2 vorgenommen werden. Da die Sitzklimatisierungsvorrichtung in diesem Fall den Fahrgast mit der warmen Luft des Innenraums umströmen würde, wäre die kompensierende kühlende Wirkung geringer ausgeprägt, wodurch es zu einem negativen Komforterlebnis des Fahrgastes käme: Dem Fahrgast wäre aufgrund der schwachen, langsamen Kühlung schlicht zu warm.

Die im Voranstehenden beschriebenen Gestaltungs- bzw. Regelungsprinzipien können sowohl zum Kühlen als auch zum Heizen des Innenraums angewendet werden, wobei der Offset-Wert dabei unter Umständen ein gegenteiliges Vorzeichen hätte, insbesondere bei Variante 1.

Weiterhin wird offenbart, dass sie Sitzklimatisierungsvorrichtung derart ausgebildet ist, dass diese die Temperatur eines durch sie bereitgestellten Luftstroms durch die Oberfläche der Sitzschale und/oder Rückenlehne beeinflussen kann. Dazu ist das Kanalsystem der Sitzvorrichtung mit einer Kühl- und/oder Heizvorrichtung verbunden, wobei diese entweder in der Sitzvorrichtung oder zentral in dem Fahrzeug vorgesehen ist.

Gemäß einem weiteren Ausführungsbeispiel ist die Sitzklimatisierungsvorrichtung entweder individuell durch einen Fahrgast an der Sitzvorrichtung selbst und/oder zentral durch die Regeleinheit aktivier- und deaktivierbar.

Weiterhin ist es denkbar, dass auch Stärke und/oder Temperatur des Luftstroms der Sitzklimatisierungsvorrichtung durch den Fahrgast selbst oder zentral von der Regeleinheit eingestellt werden kann.

Die beiden zuvor genannten Maßnahmen haben den Zweck, dass der Fahrgast gemäß seinem subjektiven Empfinden den Betrieb an sich und die Betriebscharakteristika der Sitzklimatisierungsvorrichtung manipulieren kann.

Zudem kann das Verfahren derart ausgebildet sein, dass eine durch den Fahrgast getroffene Wahl zum Betrieb der Sitzklimatisierungsvorrichtung prioritär gegenüber einem Steuerungsbefehl der Regeleinheit ist. Somit ist der Fahrgast in der Lage selbstständig und autonom darüber zu entscheiden, ob und wie die Klimatisierungsvorrichtung zu betreiben sei. Ein Gefühl der Fremdbestimmung und der damit verbundenen Komforteinbuße kann somit verhindert werden.

Gemäß einem weiteren Ausführungsbeispiel ist vorgesehen, dass die Sitzvorrichtung einen Besetzungs-Detektor aufweist, mithilfe dessen überprüft werden kann, ob ein Fahrgast auf der Sitzvorrichtung sitzt. Die dadurch gewonnene Informationen über die An- oder Abwesenheit eines Fahrgastes auf einer spezifischen Sitzvorrichtung wird von der Regeleinheit dazu verwendet, eine Entscheidung über den Betriebsmodus zu treffen und/oder die Sitzklimatisierungsvorrichtung an- oder abzuschalten. Dadurch kann das System sparsamer betrieben werden, da Sitzklimatisierungsvorrichtungen an unbesetzten Sitzplätzen zur Vermeidung von unnötigem Energieaufwand automatisch deaktiviert werden können.

Das System kann nach einer weiteren Ausführungsform mehrere Sitzvorrichtungen mit jeweils einer Sitzklimatisierungsvorrichtung aufweisen. Mithilfe der Information über den Betriebszustand der einzelnen Sitzklimatisierungsvorrichtungen und/oder über den Belegungszustand einer jeweiligen Sitzvorrichtung trifft das System bzw. die Regeleinheit des Systems auf Basis vordefinierter Kriterien eine Entscheidung über den Norm- oder Offset-Regelungsbetrieb. Insbesondere wird vom Norm- in den Offset-Regelungsbetrieb umgeschaltet, wenn mindestens ein bestimmter Anteil der vorhandenen Sitzklimatisierungsvorrichtungen aktiviert ist, insbesondere mindestens 50%, und bevorzugt mindestens 30%. Dies gilt umgekehrt analog für ein Umschalten vom Offset-Regelungsbetrieb zurück in den Norm-Regelungsbetrieb.

Auf diese Weise wird ermöglicht, dass das System im Norm-Regelungsbetrieb gefahren wird, wenn zum Beispiel ein Großteil der Sitzvorrichtungen zwar belegt ist, aber aufgrund individueller Entscheidungen eines jeweiligen Fahrgastes die jeweilige Sitzklimatisierungsvorrichtung deaktiviert ist. Denn in einem solchen Fall würde ein Betrieb des Systems in Offset-Regelung dazu führen, dass ein Fahrgast auf eine Sitzvorrichtung mit deaktivierter Sitzklimatisierungsvorrichtung ein unerwünschtes Komforterlebnis erfahren würde. Zum Beispiel wäre es dem Fahrgast zu warm oder zu kalt, da sich an seiner Sitzvorrichtung kein Mikroklima durch Zusammenwirken von Sitzklimatisierung- und Raumklimatisierungsvorrichtung ausbilden würde.

Gemäß einer möglichen Ausführungsform der Erfindung erfolgt ein Umschalten zwischen Norm- und Offset-Regelungsbetrieb unter Verwendung einer zeitlichen Schalthysterese oder einer Kriterien-Hysterese. Dies dient dazu, ein oftmaliges Umschalten zwischen den Betriebsarten zu vermeiden. Denn ein solches hektisches Umschalten würde aufgrund von Unruhe den Reisekomfort eines Fahrgastes schmälern. Insbesondere soll ein temporäres Aufstehen und Hinsetzen eines oder mehrerer Fahrgäste nicht zu einem Umschalten zwischen den Betriebsarten führen. Eine solche zeitliche Hysterese kann zum Beispiel mindestens fünf Minuten, insbesondere bevorzugt zwei Minuten betragen.

Unter Kriterien-Hysterese wird zum Beispiel verstanden, ein Umschalten zwischen den Betriebsarten erst dann umzusetzen, wenn das entsprechende Entscheidungskriterium um ein festgelegtes Maß überschritten wird. Hinsichtlich des oben genannten Ausführungsbeispiels könnte das dahingehend ausgeführt sein, dass ein Umschalten zwischen dem Norm- oder Offset-Regelungsbetrieb erst erfolgt, wenn der 50-prozentige Aktivierungswert der einzelnen Sitzklimatisierungsvorrichtungen um einen gewissen Prozentsatz, zum Beispiel 5% oder 10% über- bzw. unterschritten wird.

Im Rahmen der Erfindung wird unter dem Vermögen der Sitzklimatisierungsvorrichtung, eine dem Fahrgast zugewandte Seite der Sitzvorrichtung temperieren zu können, verstanden, dass die Oberfläche der Sitzschale und/oder der Rückenlehne hinsichtlich ihrer realen Temperatur oder hinsichtlich des subjektiven Temperaturempfindens des Fahrgastes beeinflusst werden kann. Denkbar aber nicht beschränkt darauf ist dabei, dass in Oberflächennähe der Sitzvorrichtung kühlende oder heizende Elemente vorgesehen sind und/oder be- und entlüftbare Öffnungen oder Poren in der Oberfläche vorgesehen sind, durch welche unbehandelte oder temperiert Umgebungsluft geleitet werden kann. Weiterhin könnte eine solche Be- oder Entlüftung mittels einer entsprechenden Vorrichtung in dem jeweiligen Sitz, zum Beispiel mittels eines Lüfters, oder einer im Fahrzeug zentral vorhandenen, mit einem Kanalsystem der Sitzvorrichtung verbundenen Klimatisierungs-und/oder Lüftungsvorrichtung umgesetzt sein.

Gemäß einer weiteren Ausführungsform ist das Verfahren derart gestaltet, dass die Leistungsaufnahme oder die Klimaleistung der Sitzklimatisierungsvorrichtung oder die Stärke und/oder die Temperatur eines von der Sitzklimatisierungsvorrichtung erzeugten Luftstroms von der Ist-Temperatur abhängig ist/sind. Diese Weise kann das Ausmaß des Zusammenwirkens von Raum- und Sitzklimatisierungsvorrichtung beeinflusst werden.

Im Rahmen der Erfindung wird ein System zum Klimatisieren eines Innenraums, insbesondere eines Fahrzeugs, offenbart, welches eine Raumklimatisierungsvorrichtung mindestens eine Sitzvorrichtung mit einer Sitzklimatisierungsvorrichtung, einen Temperatursensor zur Messung einer Ist-Temperatur im Innenraum und eine Regeleinheit umfasst. Die Regeleinheit ist mit der Sitzklimatisierungsvorrichtung und der Raumklimatisierungsvorrichtung zur Steuerung dieser zum Austausch von Signalen verbunden und weiterhin konfiguriert, die oben genannten Ausführungsformen und Ausgestaltungen, entweder einzeln oder in Kombination, des erfindungsgemäßen Verfahrens ausführen zu können.

In Weiterentwicklung des Systems wird angeführt, dass die Sitzklimatisierungsvorrichtung einen Lüfter und ein Kanalsystem zum Führen von Luft umfasst. Das Kanalsystem ist derart in einer Sitzschale und/oder in einer Rückenlehne der Sitzvorrichtung vorgesehen, sodass mindestens eine Kanalöffnung des Kanalsystems in einer einem Fahrgast zugewandten Seite der Sitzschale und/oder der Rückenlehne mündet. Die Kanalöffnungen können dabei als Poren oder gegenständliche Öffnungen zum direkten Durchströmen oder Diffundieren ausgebildet sein.

Gemäß einer weiteren Ausgestaltung umfasst die Sitzklimatisierungsvorrichtung einen Wärmetauscher zum Beeinflussen einer Temperatur der durch das Kanalsystem strömenden Luft. Somit kann das Temperaturerlebnis eines Fahrgastes direkt beeinflusst werden, wobei insbesondere die einzustellende Temperatur von der Ist-Temperatur im Innenraum abhängig ist.

Es liegt weiterhin im Rahmen der Erfindung ein Fahrzeug, insbesondere ein Schienenfahrzeug, darzustellen, welches einen Wagenkasten bzw. eine Kastenstruktur aufweist, wodurch ein Innenraum gebildet wird. In diesem ist insbesondere ein System wie vorangehend geschildert vorgesehen.

Besonders vorteilhaft zeigen sich die Anwendung des beschriebenen Verfahrens und ein entsprechendes System in einem Fahrzeug größerer Dimension. Ein solches Fahrzeug kann beispielsweise ein Bus, ein Schienenfahrzeug, ein Waggon oder eine Lokomotive eines Schienenfahrzeugs, ein aus mehreren Waggons oder Triebfahrzeugen bestehender Zug oder ein Luftfahrzeug zum Transport von einer großen Anzahl von Personen sein. Den beschriebenen Fahrzeugen wohnt es inne, dass diese die Dimensionen eines PKWs um ein Vielfaches überschreiten und eine erhöhte Anzahl von Sitzplätzen, insbesondere mehr als acht Sitzplätzen, für Fahrgäste aufweisen. Das erfindungsgemäße Verfahren und das System erweisen sich in den genannten Fahrzeugen als besonders geeignet, da wegen der hohen Fahrgastanzahl die subjektive Beeinflussung der Umgebungsbedingungen im Innenraum, das heißt der gefühlten Temperatur im Mikroklima einer einzelnen Sitzvorrichtung besonders wirksam ist, und dazu seine Wirkung auch sehr schnell entfaltet. Weiterhin ist die Anwendung in einem verhältnismäßig großen Objekt bzw. Fahrzeug besonders günstig, da eine Temperaturänderung eines großen Volumens eines Innenraums sehr Energie aufwendig ist, und deshalb der Energiespareffekt in den genannten Fahrzeugen besonders deutlich wird.

Die vorstehend beschriebenen Ausführungsformen können beliebig, jedoch in sinnhafter Weise miteinander kombiniert werden.

### Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu.

Gleiche Bezugszeichen bezeichnen entsprechend ähnliche Teile.
Fig. 1 zeigt ein Schienenfahrzeug, wobei Umgebungskonditionen des Innenraums mittels eines Systems zum Klimatisieren beeinflusst werden könne.
Fig. 2 zeigt ein schematisches Blockschaltbild des erfindungsgemäßen Verfahrens.
Fig. 3 führt ein schematisches Abbild eines Waggons des Schienenfahrzeugs gemäß Fig. 1 mit einem System zum Klimatisieren des Innenraums an.

### Ausführungsbeispiele

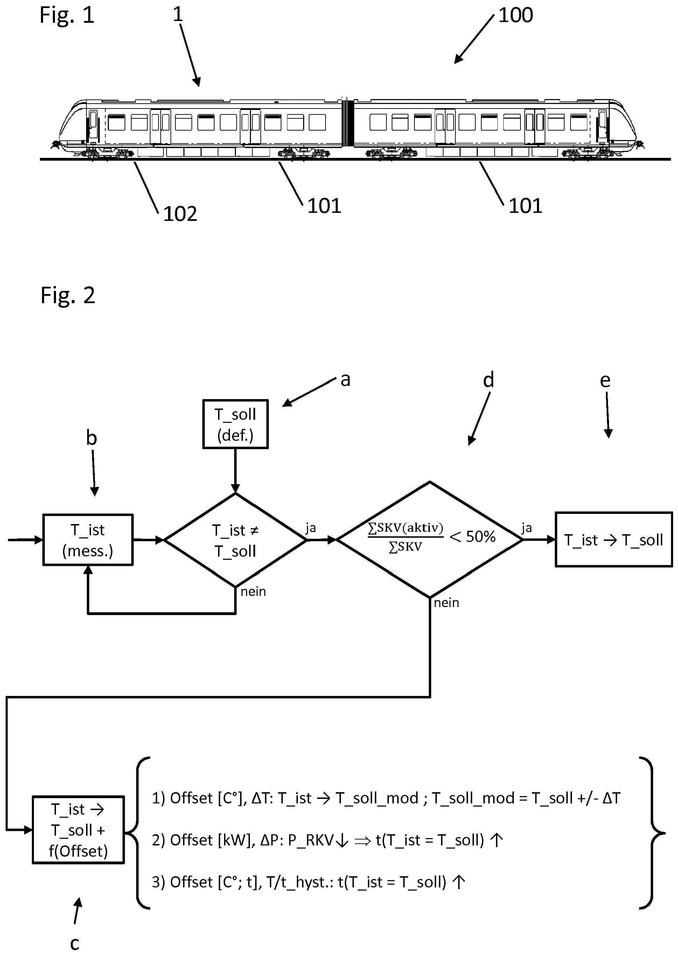

Zur Verdeutlichung des Gesamtzusammenhangs wird anhand Fig. 1 ein Schienenfahrzeug 100 dargestellt. Dieses umfasst wie gezeigt zwei Einzel-Schienenfahrzeuge bzw. zwei aneinandergekoppelte Passagierwaggons mit jeweils einem Wagenkasten 101.

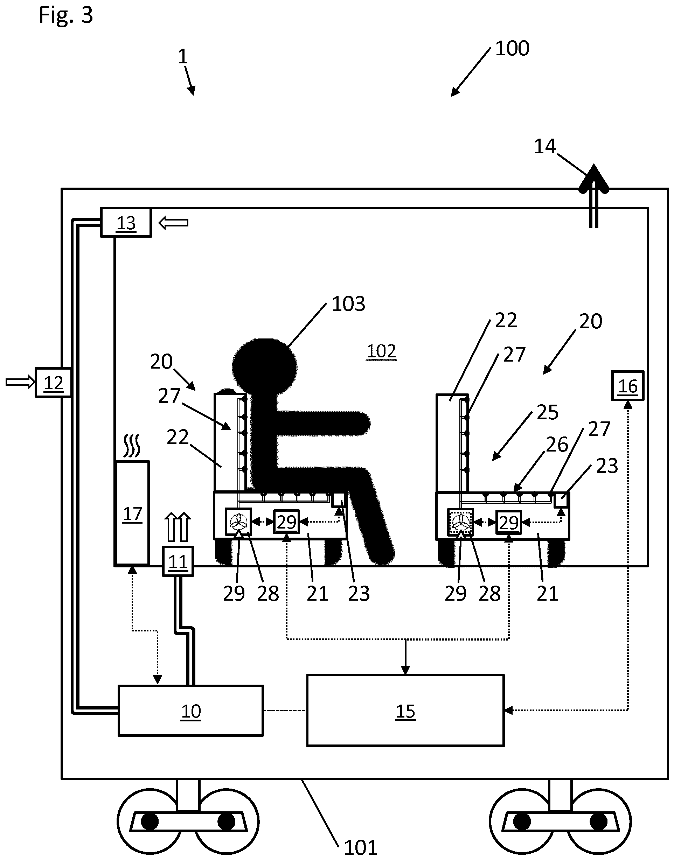

Das Schienenfahrzeug 100 bzw. ein Waggon des Schienenfahrzeugs 100 ist anhand Fig. 3 schematisch dargestellt. Dabei soll der grundsätzliche Aufbau eines Systems 1 zum Klimatisieren eines Innenraums 102 in dem Wagenkasten 101 des Schienenfahrzeugs 100 erläutert werden.

Das System 1 zum Klimatisieren des Innenraums 102 umfasst dabei eine Raumklimatisierungsvorrichtung 10 zum Konditionieren von im Innenraum befindlicher Luft, oder von darin eingeleiteter Luft. Die Raumklimatisierungsvorrichtung 10 kann beispielsweise als herkömmliche Klimaanlage gestaltet sein, die über einen Einlass 12 Luft von einer Außenseite des Schienenfahrzeugs 100 oder auch wahlweise über eine Rückführöffnung 13 im Innenraum 102 ansaugen kann. Die angesaugte Luft wird beispielsweise gefiltert und nach Bedarf erwärmt oder gekühlt und über den Auslass 11 in den Innenraum 102 geführt.

Über einen Auslass 14 kann Luft aus dem Innenraum 102 direkt in die Umgebung des Schienenfahrzeugs 100 austreten. Gegebenenfalls ist ein solcher Auslass 14 mit Schaltmitteln, zum Beispiel mit einer schaltbaren Klappe versehen.

Denkbar ist auch, dass wie in Fig. 3 gezeigt eine Heizvorrichtung 17 im Innenraum 102 vorgesehen ist, mittels welcher die im Innenraum 102 befindliche Luft direkt erwärmt werden kann. In diesem Zusammenhang ist die zusätzliche Heizvorrichtung 17 als Teil der Raumklimatisierungsvorrichtung 10 anzusehen.

Weiterhin sind zwei Sitzvorrichtungen 20 im Innenraum 102 vorgesehen, welche dazu geeignet sind, dass ein Fahrgast 103 sich darauf hinsetzen kann. Dazu ist die Sitzvorrichtung 20 mit einer Sitzschale 21 und einer Rückenlehne 22 versehen. Diese Vorrichtung 20 ist nicht auf die hier dargestellte Ausführung als Einzelsitze beschränkt, sondern kann auch als Sitzbank mit einer durchgehenden Sitzschale und Rückenlehne für mehrere Fahrgäste ausgebildet sein.

Die Sitzvorrichtung 20 weist weiter eine Sitzklimatisierungsvorrichtung 25 auf. Diese setzt sich, nicht abschließend, aus einem Kanalsystem 26, Kanalöffnungen 27 und einem Lüfter 28 zusammen, wobei das Kanalsystem 26 im Inneren der Sitzschale 21 und der Rückenlehne 22 verläuft und den Lüfter 28 mit den Kanalöffnungen 27 verbindet. Die Kanalöffnungen 27 sind dabei in einer dem Fahrgast 103 zugewandten Oberfläche der Sitzschale 21 und der Rückenlehne 22 angeordnet. Der Lüfter 28 ist derart geeignet in oder an der Sitzvorrichtung 20 vorgesehen, sodass Luft aus dem Innenraum 102 entweder durch die Lüfteröffnung 30 in das Kanalsystem 26 ein geblasen werden kann und folglich aus den Kanalöffnungen 27 wieder austritt, oder durch die Kanalöffnungen 27 eingezogen wird und aus der Lüfteröffnung 30 in den Innenraum 102 zurückströmt. Sitzt nun ein Fahrgast 103 auf der Sitzvorrichtung 20, so wird dessen Körperoberfläche im Bereich der Sitzschale 21 und Rückenlehne 22 durch die Kanalöffnungen 27 angeströmt, wodurch es für den Fahrgast zu einer subjektiven Temperaturveränderung kommt. Je nach vorliegender Ist-Temperatur im Innenraum 102 bewirkt diese Anströmung bei dem Fahrgast 103 ein Empfinden von Kälte oder Wärme.

Zudem ist in der Sitzvorrichtung 20 ein Detektor 23 wirksam vorgesehen, mittels welchem geprüft werden kann, ob ein Fahrgast 103 auf der Sitzvorrichtung 20 vorhanden ist oder nicht.

Gemäß der Ausführungsform nach Fig. 3 weist die Sitzklimatisierungsvorrichtung 25 eine Steuereinheit 29 auf, die das Prüfsignal des Detektors 23 aufnehmen und den Lüfter 28 ansteuern kann.

Das System 1 umfasst weiterhin die Regeleinheit 15, die wiederum dazu ausgebildet ist, dass erfindungsgemäße Verfahren und die beschriebenen Ausführungsformen davon umzusetzen, indem die Regeleinheit 15 die Raumklimatisierungsvorrichtung 10, und darüber gegebenenfalls die Heizvorrichtung 17, die Steuereinheit 29, und darüber den Lüfter 28, ansteuern kann. Weiterhin empfängt die Steuereinheit 15 das Messsignal eines im Innenraum 102 montierten Temperatursensors 16 und des Detektors 23.

Die beschriebenen Komponenten und Einzelheiten des System 1 sind dazu ausgebildet, unterschiedliche Ausführungsformen des erfindungsgemäßen Verfahrens umzusetzen, welches anhand Fig. 2 schematisch wiedergegeben ist. Mit den Buchstaben a, b, c, d und e sind in Fig. 2 verschiedene Kästen bezeichnet, welche unterschiedliche Schritte einer Ausführungsform des Verfahrens wiedergeben. Es sei klargestellt, dass die alphabetische Reihenfolge der genannten Buchstaben nicht zwingend als Ablauffolge des Verfahrens zu verstehen ist. Beispielsweise kann die Handlung a auch nach der Handlung b oder auch alternierend ausgeführt werden.
a: Voraussetzung für die Anwendung des Verfahrens ist die Definition bzw. Wahl einer Soll-Temperatur T_soll für den Innenraum 102. Dieser Schritt kann bereits im Vorfeld, zum Beispiel vor Abfahrt des Schienenfahrzeugs 100, oder auch je nach Bedarf durch autorisiertes Personal oder auch durch die Regeleinheit 15 vorgenommen werden. Gemäß einem der Verdeutlichung dienlichen, konkreten Beispiel wird von einem Zugbegleiter des Schienenfahrzeugs 100 kurz vor Abfahrt die Soll-Temperatur T_soll auf 21 °C festgelegt.
b: In dem Schritt b wird mittels des Temperatursensors 16 die Ist-Temperatur T_ist im Innenraum 102 gemessen. Diese liegt beispielsweise bei 28 °C, da das Schienenfahrzeug 100 vor Einsatz in der Sonne stand.
d: Durch Anwendung des Schritts überprüft die Regeleinheit 15, ob das System 1 zur Klimatisierung des Innenraums 102 nach Norm-Regelungsbetrieb oder unter Anwendung des Offset-Regelungsbetrieb gefahren werden soll. Nach dem konkreten Beispiel sollte der Norm-Regelungsbetrieb e gewählt werden wenn weniger als die Hälfte aller Sitzklimatisierungsvorrichtungen 25 (SKV) in Betrieb sind. Sind mindestens 50% der Systematisierungsvorrichtungen 25 aktiv, so wird das System 1 im Offset-Regelungsbetrieb c betrieben.
e: Wenn weniger als die Hälfte der Sitzklimatisierungsvorrichtungen 25 aktiv wären, würde die Regelung der Ist-Temperatur T_ist direkt auf die Soll-Temperatur T_soll erfolgen. Dabei würde die Raumklimatisierungsvorrichtung 10 so lange betrieben bis die dadurch gekühlte und durch den Einlass 11 in den Innenraum 102 ein geblasene Luft die Ist-Temperatur T_ist die Soll-Temperatur T_soll erreicht hat. Das vorliegende konkrete Beispiel weiterführend würde das bedeuten, dass die Raumklimatisierungsvorrichtung 10 arbeitet, bis die Raumtemperatur die gewünschten 21 °C erreicht hat.
d: Wenn wenigstens die Hälfte der Sitzklimatisierungsvorrichtungen 25 in Betrieb sind, so schaltet die Regeleinheit 15 vom Norm-Regelungsbetrieb e in den Offset-Regelungsbetrieb c. Dafür gibt es mehrere Varianten 1) bis 3), die im Folgenden dargestellt werden sollen.

Gemäß Variante 1) dient der Offset-Wert dazu, die definierte Soll-Temperatur T_soll hin zu einer modifizierten Soll-Temperatur T_soll_mod abzuändern. Diese modifizierte Soll-Temperatur T_soll_mod liegt im vorliegenden Fall über der ursprünglichen Soll-Temperatur T_soll. Die modifizierte Soll-Temperatur T_soll_mod wird so gewählt, dass die Temperaturdifferenz ΔT zwischen Ausgangstemperatur und Endtemperatur geringer ist als im Norm-Regelungsbetrieb. Dies führt zu einem reduzierten Energiebedarf. Für das konkrete Beispiel bedeutete dies, dass ein Offset-Wert von beispielsweise 2 °C gewählt wird - entweder ab Werk vorab eingestellt oder durch die Regeleinheit 15 in Abhängigkeit der Temperatur im Innenraum oder der Temperaturdifferenz ΔT bestimmt-, und somit die Regelung der Ist-Temperatur T_ist im Innenraum 102 auf die modifizierte Soll-Temperatur T_soll_mod von 23 °C erfolgt. Der Innenraum 102 wird also auf 23 °C anstatt auf 21 °C abgekühlt. Durch gleichzeitiges Betreiben der Sitzklimatisierungsvorrichtung 25 wird dieser Temperaturunterschied dem Fahrgast 103 im Wesentlichen nicht bewusst. Indem der Fahrgast 103 über die Kanalöffnungen 27 mit Luft angeströmt wird, stellt dessen subjektives Temperaturempfinden keine unkomfortable Temperatursituation fest.

Bei Anwendung der Variante 2) ist der Offset-Wert zum Beispiel als Leistungsdifferenz ΔP ausgebildet, wobei diese entweder in Abhängigkeit von Umgebungsfaktoren dynamisch oder vorab statisch vorbestimmt ist. Folglich wird die Raumklimatisierungsvorrichtung 10 mit einer reduzierten Leistung P_RKV betrieben, wodurch sich die Zeit t(T_ist = T_soll) bis zur Erreichung der Soll-Temperatur T_soll verlängert. Der Fahrgast 103 bemerkt diese Verlangsamung der Temperaturregelung im Wesentlichen nicht, da - wie oben beschrieben - die Sitzklimatisierungsvorrichtung 25 aktiv ist.

Gemäß Variante 3) beeinflusst der Offset-Wert eine Schalt- und/oder Temperaturhysterese der Regelung der Ist-Temperatur T_ist auf die Soll-Temperatur T _ soll. Dadurch wird die gesamte Regelung träger und die Zeit bis zur Erreichung der Soll-Temperatur T_soll verlängert sich.

Es liegt im Rahmen der Erfindung, dass die Varianten 1) bis 3) gegebenenfalls auch in Kombination miteinander zur Anwendung gelangen.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die nachfolgenden Ansprüche stellen einen ersten, nicht bindenden Versuch dar, die Erfindung allgemein zu definieren.

### Bezugszeichenliste

- 1: System

- 10: Raumklimatisierungsvorrichtung
- 11: Einlass
- 12: Ansaugöffnung
- 13: Rückführöffnung
- 14: Auslass

- 15: Regeleinheit
- 16: Temperatursensor
- 17: zusätzliche Heizvorrichtung

- 20: Sitzvorrichtung
- 21: Sitzschale
- 22: Rückenlehne
- 23: Detektor

- 25: Sitzklimatisierungsvorrichtung
- 26: Kanalsystem
- 27: Kanalöffnung
- 28: Lüfter
- 29: Steuereinheit
- 30: Lüfteröffnung

- 100: Schienenfahrzeug
- 101: Wagenkasten
- 102: Innenraum
- 103: Fahrgast

## Patentansprüche

1. Verfahren zum Betrieb eines Systems (1) zum Klimatisieren eines Innenraums (102), insbesondere eines Fahrzeugs (100),
- wobei das System (1) eine Raumklimatisierungsvorrichtung (10) zum Konditionieren von im Innenraum (102) befindlicher oder von darin eingeleiteter Luft, mindestens eine Sitzvorrichtung (20) umfassend eine Sitzklimatisierungsvorrichtung (25) zum Temperieren einer einem Fahrgast (103) zugewandten Seite der Sitzvorrichtung (20), und eine Regeleinheit (15) zum Ansteuern der Raumklimatisierungsvorrichtung (10) und der Sitzklimatisierungsvorrichtung (25) aufweist,
- das Verfahren gemäß eines Offset-Regelungsbetriebs die Schritte
a) Vorgeben einer Soll-Temperatur für den Innenraum (102),
b) Messen einer Ist-Temperatur im Innenraum (102), und
c) wenn Sitzklimatisierungsvorrichtung (25) aktiv, Regeln der Ist-Temperatur auf die Soll-Temperatur unter Einbeziehung eines Offset-Werts durch Einsatz der Regeleinheit (15) und der davon entsprechend angesteuerten Raumklimatisierungsvorrichtung (10), wobei der Offset-Wert dazu verwendet wird, um eine Regelungstoleranz (Variante 1) und/oder Regelhysterese zu erhöhen (Variante 3) und/oder um eine Leistungsaufnahme oder eine Klimaleistung der Raumklimatisierungsvorrichtung (10) zu verringern (Variante 2), umfasst,
- wobei zusätzlich ein Norm-Regelungsbetrieb vorgesehen ist, bei dem ein Sollwert der Temperatur ohne Verwendung des Offset-Wert als Führungsgröße dient, und
- wobei eine Bedingung für den Betrieb des Systems (1) für ein Umschalten zwischen Norm-Regelungsbetrieb und Offset-Regelungsbetrieb vorgesehen ist.

2. Verfahren nach Anspruch 1, aufweisend die Schritte:
d) Prüfen, ob die Sitzklimatisierungsvorrichtung (25) aktiv ist;
e) wenn Sitzklimatisierungsvorrichtung (25) inaktiv, Regeln der Ist-Temperatur auf die Soll-Temperatur ohne Einbeziehung des Offset-Werts durch Einsatz der Regeleinheit (15) und der Raumklimatisierungsvorrichtung (10), und insbesondere durch keinen Einsatz einer weiteren Klimatisierungsvorrichtung.

3. Verfahren nach Anspruch 1 oder 2, wobei die Sitzklimatisierungsvorrichtung (25) entweder individuell durch einen Fahrgast (103) an der Sitzvorrichtung (20) und/oder zentral durch die Regeleinheit (15) aktiviert und deaktiviert wird, und insbesondere auch Stärke und/oder Temperatur eines von der Sitzklimatisierungsvorrichtung (25) erzeugten Luftstroms von dem Fahrgast (103) oder zentral von der Regeleinheit (15) eingestellt wird.

4. Verfahren nach Anspruch 3, wobei eine durch den Fahrgast (103) getroffene Wahl über den Betrieb der Sitzklimatisierungsvorrichtung (25) prioritär gegenüber einem Steuerungsbefehl der Regeleinheit (15) ist.

5. Verfahren nach Anspruch 3 oder 4, wobei die Sitzvorrichtung (20) einen Besetzungs-Detektor (23) aufweist, und die Regeleinheit (15) damit die Anwesenheit eines Fahrgastes (103) auf der Sitzvorrichtung (20) überprüft, wobei die entsprechende Sitzklimatisierungsvorrichtung (25) je nach Ab- oder Anwesenheit eines Fahrgastes (103) deaktiviert oder, insbesondere bei übereinstimmender entsprechender Wahl des Fahrgastes (103), aktiviert wird.

6. Verfahren nach Anspruch 5, wobei das System (1) mehrere Sitzvorrichtungen (20) mit jeweils einer Sitzklimatisierungsvorrichtung (25) aufweist, und Schritt c) nach Anspruch 1 nur ausgeführt wird, wenn ein mindestens ein bestimmter Anteil der Sitzklimatisierungsvorrichtungen (25) aktiviert ist, insbesondere mindestens 30%, bevorzugt mindestens 50%.

7. Verfahren nach Anspruch 6, wobei ein Umschalten zwischen einem Betrieb gemäß Schritt c) nach Anspruch 1 oder Schritt e) nach Anspruch 2 unter Verwendung einer zeitlichen Schalthysterese erfolgt, insbesondere dass die Schalthysterese 5 Minuten, bevorzugt 2 Minuten beträgt.

8. Verfahren nach einem der voran gestellten Ansprüche, wobei mittels des Offset-Werts eine modifizierte Soll-Temperatur bestimmt wird, welche anstelle der Soll-Temperatur als Regelgröße in Schritt c) nach Anspruch 1 verwendet wird.

9. Verfahren nach einem der voran gestellten Ansprüche, wobei der Offset-Wert abhängig von einer Temperaturdifferenz zwischen Ist-Temperatur und Soll-Temperatur ist, und/oder der Offset-Wert eine Ober- und/oder Untergrenze aufweist, so dass insbesondere die Regelungstoleranz einen Wert von 4° Celsius, bevorzugt 2° Celsius nicht überschreitet.

10. Verfahren nach einem der voran gestellten Ansprüche, wobei die Leistungsaufnahme oder die Klimaleistung der Sitzklimatisierungsvorrichtung (25) oder die Stärke und/oder Temperatur eines von der Sitzklimatisierungsvorrichtung (25) erzeugten Luftstroms von der Ist-Temperatur abhängig ist.

11. System (1) zum Klimatisieren eines Innenraums (102), insbesondere eines Fahrzeugs (100), aufweisend
- eine Raumklimatisierungsvorrichtung (10) zum Konditionieren von im Innenraum (102) befindlicher oder darin eingeleiteter Luft,
- mindestens eine Sitzvorrichtung (20) mit einer Sitzklimatisierungsvorrichtung (25) zum Temperieren einer einem Fahrgast (103) zugewandten Seite der Sitzvorrichtung (20),
- einen Temperatursensor (16) zur Messung einer Ist-Temperatur im Innenraum (102), und
- eine Regeleinheit (15), die mit der Sitzklimatisierungsvorrichtung (25) und der Raumklimatisierungsvorrichtung (10) zur Steuerung derer signaltechnisch verbunden und zum Ausführen des Verfahrens gemäß einem der voran gestellten Ansprüche konfiguriert ist.

12. System (1) nach Anspruch 11, wobei die Sitzklimatisierungsvorrichtung (25) einen Lüfter (29) und ein Kanalsystem (26) zum Führen von Luft umfasst, welche derart in einer Sitzschalte (21) und/oder in einer Rückenlehne (22) der Sitzvorrichtung (20) vorgesehen sind, so dass mindestens eine Kanalöffnung (27) des Kanalsystems (26) in einer einem Fahrgast (103) zugewandten Seite der Sitzschale (21) und/oder der Rückenlehne (22) zum Be- oder Entlüften derselben mündet.

13. System (1) gemäß Anspruch 12, wobei sie Sitzklimatisierungsvorrichtung (25) einen Wärmetauscher zum Beeinflussen einer Temperatur der durch das Kanalsystem (26) strömenden Luft aufweist.

14. System (1) nach einem der Ansprüche 11 bis 13, wobei die Sitzvorrichtung (20) einen Besetzungs-Detektor (23) zum Überprüfen der Anwesenheit eines Fahrgastes (103) auf der Sitzvorrichtung (20) aufweist.

15. Fahrzeug, insbesondere Schienenfahrzeug (100), mit einem Wagenkasten (101) und einem Innenraum (102), aufweisend ein System (1) zum Klimatisieren nach einem der Ansprüche 11 bis 14, insbesondere wobei die Raumklimatisierungsvorrichtung (10) zumindest im Wesentlichen außerhalb des Innenraums (102) im Fahrzeug angeordnet ist, mittels eines Einlass (11) konditionierte Luft in den Innenraum (102) leitbar ist, und wobei mehrere Sitzvorrichtungen (20) mit jeweils mindestens einer Sitzklimatisierungsvorrichtung (25) im Innenraum (102) vorgesehen sind.

## Claims

1. A method for operating a system (1) for air-conditioning an interior (102), in particular of a vehicle (100),
- the system (1) having a room air-conditioning device (10) for conditioning air located in the interior (102) or in ducted therein, at least one seat device (20) comprising a seat air-conditioning device (25) for conditioning a side of the seat device (20) facing a passenger (103), and a control unit (15) for controlling the room air-conditioning device (10) and the seat air-conditioning device (25),
- wherein said method according to an offset control mode comprises the steps of
a) setting of a target temperature for the interior (102),
b) measurement of an actual temperature in the interior (102), and
c) if seat air-conditioning device (25) is active, controlling the actual temperature to the target temperature with an offset value taken into account by using the control unit (15) and the room air-conditioning device (10) controlled accordingly therefrom, the offset value being used to increase a control tolerance (variant 1) and/or a control hysteresis (variant 3) and/or to reduce a power input or a climatic power output of the room air-conditioning device (10) (variant 2),
- wherein a standard control mode is additionally provided, in which a target value of the temperature serves as the reference variable without using the offset value, and
- wherein a condition for the operation of the system (1) is provided for switching between standard control mode and offset control mode.

2. The method according to claim 1 comprising the steps:
d) Checking if the seat air conditioning device (25) is active;
e) if the seat air-conditioning device (25) is inactive, controlling the actual temperature to the target temperature without taking into account the offset value by using the control unit (15) and the room air-conditioning device (10), and in particular by not using any further air-conditioning device.

3. The method according to claim 1 or 2, wherein the seat air-conditioning device (25) is activated and deactivated either individually by a passenger (103) at the seat device (20) and/or centrally by the control unit (15), in particular wherein the strength and/or temperature of an air flow generated by the seat air-conditioning device (25) is also set by the passenger (103) or centrally by the control unit (15).

4. The method according to claim 3, wherein a choice made by the passenger (103) about the operation of the seat air-conditioning device (25) is prioritized over a control command of the control unit (15).

5. The method according to claim 3 or 4, wherein the seat device (20) has an occupancy detector (23), and the control unit (15) thereby checks the presence of a passenger (103) on the seat device (20), wherein the corresponding seat air-conditioning device (25) is deactivated or is activated depending on the absence or presence of a passenger (103), in particular if the passenger (103) has chosen correspondingly.

6. The method according to claim 5, wherein the system (1) comprises a plurality of seat devices (20) each having a seat climate control device (25), and step c) according to claim 1 is performed only if at least a certain percentage of the seat climate control devices (25) is activated, in particular at least 30%, preferably at least 50%.

7. The method according to claim 6, wherein switching between an operation according to step c) according to claim 1 or step e) according to claim 2 takes place using a temporal switching hysteresis, in particular that the switching hysteresis is 5 minutes, preferably 2 minutes.

8. The method according to one of the preceding claims, wherein a modified target temperature is determined by means of the offset value, which target temperature is used instead of the target temperature as a input variable in step c) according to claim 1.

9. The method according to one of the preceding claims, wherein the offset value is dependent on a temperature difference between the actual temperature and the target temperature, and/or the offset value has an upper and/or lower limit, so that in particular the control tolerance does not exceed a value of 4° Celsius, preferably 2° Celsius.

10. The method according to one of the preceding requirements, wherein the power consumption or the climate power output of the seat air-conditioning device (25) or the strength and/or temperature of an air flow generated by the seat air-conditioning device (25) is dependent on the actual temperature.

11. A system (1) for air-conditioning an interior (102), in particular of a vehicle (100), comprising
- a room air-conditioning device (10) for conditioning air located in or ducted into the interior (102),
- at least one seat device (20) with a seat air-conditioning device (25) for conditioning a side of the seat device (20) facing a passenger (103),
- a temperature sensor (16) for measuring an actual temperature in the interior (102), and
- a control unit (15) connected to the seat air-conditioning device (25) and the room air-conditioning device (10) for controlling the latter by means of signals and configured to implement the method according to one of the preceding claims.

12. The system (1) according to claim 11, wherein the seat air-conditioning device (25) comprises a fan (29) and a duct system (26) for guiding air which have been provided in a seat switch (21) and/or in a backrest (22) of the seat device (20) such that at least one duct opening (27) of the duct system (26) leads into a side of the seat shell (21) and/or the backrest (22) facing a passenger (103) for ventilating or venting the same.

13. The system (1) according to claim 12, wherein the seat air-conditioning device (25) comprises a heat exchanger for manipulating a temperature of the air passing through the duct system (26).

14. The system (1) according to any one of claims 11 to 13, wherein the seat device (20) comprises an occupancy detector (23) for checking the presence of a passenger (103) on the seat device (20).

15. A vehicle, in particular a rail vehicle (100), having a vehicle body (101) and an interior space (102), having a system (1) for air-conditioning according to one of the claims 11 to 14, in particular wherein the room air-conditioning device (10) is arranged at least substantially outside the interior (102) in the vehicle, conditioned air can be ducted into the interior (102) by inlet means (11), and wherein a plurality of seat devices (20) each having at least one seat air-conditioning device (25) are provided in the interior (102).

## Revendications

1. Procédé de fonctionnement d'un système (1) destiné à climatiser un espace intérieur (102), en particulier d'un véhicule (100),
- le système (1) présentant un dispositif de climatisation d'espace (10) destiné à conditionner de l'air situé dans l'espace intérieur (102) ou introduit dans celui-ci, au moins un dispositif de siège (20) comprenant un dispositif de climatisation de siège (25) destiné à thermoréguler une face, tournée vers un passager (103), du dispositif de siège (20), et une unité de régulation (15) destinée à commander le dispositif de climatisation d'espace (10) et le dispositif de climatisation de siège (25),
- le procédé comprenant, selon un fonctionnement de régulation avec décalage, les étapes
a) de prédéfinition d'une température de consigne pour l'espace intérieur (102),
b) de mesure d'une température réelle dans l'espace intérieur (102), et
c) lorsque le dispositif de climatisation de siège (25) est actif, de régulation de la température réelle à la température de consigne en tenant compte d'une valeur de décalage, au moyen de l'unité de régulation (15) et du dispositif de climatisation d'espace (10) commandé de manière correspondante par celle-ci, dans lequel la valeur de décalage est utilisée pour augmenter une tolérance de régulation (variante 1) et/ou hystérèse de régulation (variante 3) et/ou pour réduire une puissance absorbée ou une puissance de climatisation du dispositif de climatisation d'espace (10) (variante 2),
- dans lequel un fonctionnement de régulation normale est prévu en plus, selon lequel une valeur de consigne de la température sert de grandeur de guidage sans utilisation de la valeur de décalage, et
- dans lequel une condition pour le fonctionnement du système (1) pour un basculement entre le fonctionnement de régulation normale et le fonctionnement de régulation avec décalage est prévue.

2. Procédé selon la revendication 1, comprenant les étapes :
d) d'action consistant à vérifier si le dispositif de climatisation de siège (25) est actif;
e) si le dispositif de climatisation de siège (25) est inactif, de régulation de la température réelle à la température de consigne sans tenir compte de la valeur de décalage au moyen de l'unité de régulation (15) et du dispositif de climatisation d'espace (10), et en particulier sans aucune utilisation d'un autre dispositif de climatisation.

3. Procédé selon la revendication 1 ou 2, dans lequel le dispositif de climatisation de siège (25) est activé et désactivé soit de façon individuelle par un passager (103) sur le dispositif de siège (20) et/ou de manière centrale par l'unité de régulation (15), et en particulier également l'intensité et/ou la température d'un courant d'air produit par le dispositif de climatisation de siège (25) sont réglées par le passager (103) ou de manière centrale par l'unité de régulation (15).

4. Procédé selon la revendication 3, dans lequel un choix fait par le passager (103) concernant le fonctionnement du dispositif de climatisation de siège (25) est prioritaire par rapport à une instruction de commande de l'unité de régulation (15).

5. Procédé selon la revendication 3 ou 4, dans lequel le dispositif de siège (20) présente un détecteur d'occupation (23), et l'unité de régulation (15) contrôle avec celui-ci la présence d'un passager (103) sur le dispositif de siège (20), dans lequel le dispositif de climatisation de siège (25) correspondant est désactivé en fonction de l'absence ou de la présence d'un passager (103) ou, en particulier lorsque le choix correspondant du passager (103) concorde, est activé.

6. Procédé selon la revendication 5, dans lequel le système (1) présente plusieurs dispositifs de siège (20) avec respectivement un dispositif de climatisation de siège (25), et l'étape c) selon la revendication 1 n'est exécutée que lorsqu'un pourcentage au moins défini des dispositifs de climatisation de siège (25) est activé, en particulier au moins 30 %, de préférence au moins 50 %.

7. Procédé selon la revendication 6, dans lequel un basculement entre un fonctionnement conformément à l'étape c) selon la revendication 1 ou à l'étape e) selon la revendication 2 s'effectue au moyen d'une hystérèse de commutation temporelle, en particulier en ce que l'hystérèse de commutation atteint 5 minutes, de préférence deux minutes.

8. Procédé selon l'une quelconque des revendications précédentes, dans lequel une température de consigne modifiée, laquelle est utilisée à la place de la température de consigne en tant que grandeur de régulation à l'étape c) selon la revendication 1, est définie au moyen de la valeur de décalage.

9. Procédé selon l'une quelconque des revendications précédentes, dans lequel la valeur de décalage dépend d'une différence de température entre la température réelle et la température de consigne, et/ou la valeur de décalage présente une limite supérieure et/ou inférieure, de sorte qu'en particulier la tolérance de régulation ne dépasse pas une valeur de 4° Celsius, de préférence de 2° Celsius.

10. Procédé selon l'une quelconque des revendications précédentes, dans lequel la puissance absorbée ou la climatisation du dispositif de climatisation de siège (25) ou l'intensité et/ou la température d'un courant d'air produit par le dispositif de climatisation de siège (25) dépendent de la température réelle.

11. Système (1) de climatisation d'un espace intérieur (102), en particulier d'un véhicule (100), présentant
- un dispositif de climatisation d'espace (10) destiné à conditionner l'air situé dans l'espace intérieur (102) ou introduit dans celui-ci,
- au moins un dispositif de siège (20) avec un dispositif de climatisation de siège (25) destiné à thermoréguler une face du dispositif de siège (20) tournée vers un passager (103),
- un capteur de température (16) destiné à mesurer une température réelle dans l'espace intérieur (102), et
- une unité de régulation (15), qui est reliée par technique de signaux au dispositif de climatisation de siège (25) et au dispositif de climatisation d'espace (10) pour commander ceux-ci et qui est configurée pour mettre en oeuvre le procédé selon l'une quelconque des revendications précédentes.

12. Système (1) selon la revendication 11, dans lequel le dispositif de climatisation de siège (25) comprend un ventilateur (29) et un système de canal (26) destinés à guider de l'air, lesquels sont prévus dans une coque de siège (21) et/ou dans un dossier (22) du dispositif de siège (20) de telle sorte qu'au moins une ouverture de canal (27) du système de canal (26) débouche dans une face, tournée vers un passager (103), de la coque de siège (21) et/ou du dossier (22) pour l'aération ou la désaération.

13. Système (1) selon la revendication 12, dans lequel le dispositif de climatisation de siège (25) présente un échangeur de chaleur destiné à influencer une température de l'air circulant à travers le système de canal (26).

14. Système (1) selon l'une quelconque des revendications 11 à 13, dans lequel le dispositif de siège (20) présente un détecteur d'occupation (23) destiné à contrôler la présence d'un passager (103) sur le dispositif de siège (20).

15. Véhicule, en particulier véhicule ferroviaire (100), avec une caisse (101) et un espace intérieur (102), présentant un système (1) de climatisation selon l'une quelconque des revendications 11 à 14, en particulier dans lequel le dispositif de climatisation d'espace (10) est disposé au moins sensiblement à l'extérieur de l'espace intérieur (102) dans le véhicule, de l'air conditionné peut être acheminé dans l'espace intérieur (102) au moyen d'une entrée (11), et dans lequel plusieurs dispositifs de siège (20) sont pourvus de respectivement au moins un dispositif de climatisation de siège (25) dans l'espace intérieur (102).
